(19) Europäisches Patentamt
European Patent Office
Office européen des brevets

(11) **EP 2 670 199 A1**

(12) **EUROPEAN PATENT APPLICATION**
published in accordance with Art. 153(4) EPC

(43) Date of publication:
**04.12.2013 Bulletin 2013/49**

(51) Int Cl.:
***H04W 52/02*** *(2009.01)*

(21) Application number: **11856884.9**

(86) International application number:
**PCT/JP2011/051285**

(22) Date of filing: **25.01.2011**

(87) International publication number:
**WO 2012/101754 (02.08.2012 Gazette 2012/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited
Kawasaki-shi, Kanagawa 211-8588 (JP)**

(72) Inventor: **MURAKAMI Akiko
Kawasaki-shi
Kanagawa 211-8588 (JP)**

(74) Representative: **Stebbing, Timothy Charles
Haseltine Lake LLP
Lincoln House, 5th Floor
300 High Holborn
London WC1V 7JH (GB)**

(54) **WIRELESS BASE STATION DEVICE, WIRELESS COMMUNICATION SYSTEM, METHOD OF WIRELESS COMMUNICATION FOR WIRELESS BASE STATION DEVICE AND TERMINAL DEVICE**

(57)    A radio base station apparatus for performing radio communication with a terminal apparatus, the radio base station apparatus including: a control unit which causes to overlap first timing at which the terminal apparatus confirms incoming addressed to the terminal apparatus with a second timing transmitting a reference signal, when the radio base station apparatus transmits the reference signal discontinuously in a second transmission time period shorter than a first transmission time period; and a transmission unit which transmits to the terminal apparatus the first timing overlapped with the second timing.

FIG.7A RS DISCONTINUOUS TRANSMISSION

FIG.7B DRX cycle

FIG.7C PO

**Description**

TECHNICAL FIELD

The embodiments discussed herein are related to a radio base station apparatus, a radio communication system, a radio communication method in the radio base station apparatus, and a terminal apparatus.

BACKGROUND ART

Currently, a radio communication system such as a mobile phone system and a radio MAN (Metropolitan Area Network) is widely used. In addition, in a field of radio communication, in order to further improve a communication speed and a communication capacity, a next-generation communication technology is continuously discussed. For example, in 3GPP (3rd Generation Partnership Project) that is one of standards bodies, a radio communication system that is called LTE (Long Term Evolution) and a radio communication system that is called LTE-A (Long Term Evolution-Advanced) in which the development of LTE is worked on have been proposed.

In such a radio communication system, a radio base station apparatus (hereinafter referred to as "base station") transmits a reference signal to a terminal apparatus (hereinafter referred to as "terminal"). The terminal can perform synchronous detection and cell search and measure a radio propagation channel state using the reference signal. The terminal can perform, for example, transmission or reception of data in synchronization with the base station by performing the synchronous detection, so that efficient radio communication can be performed.

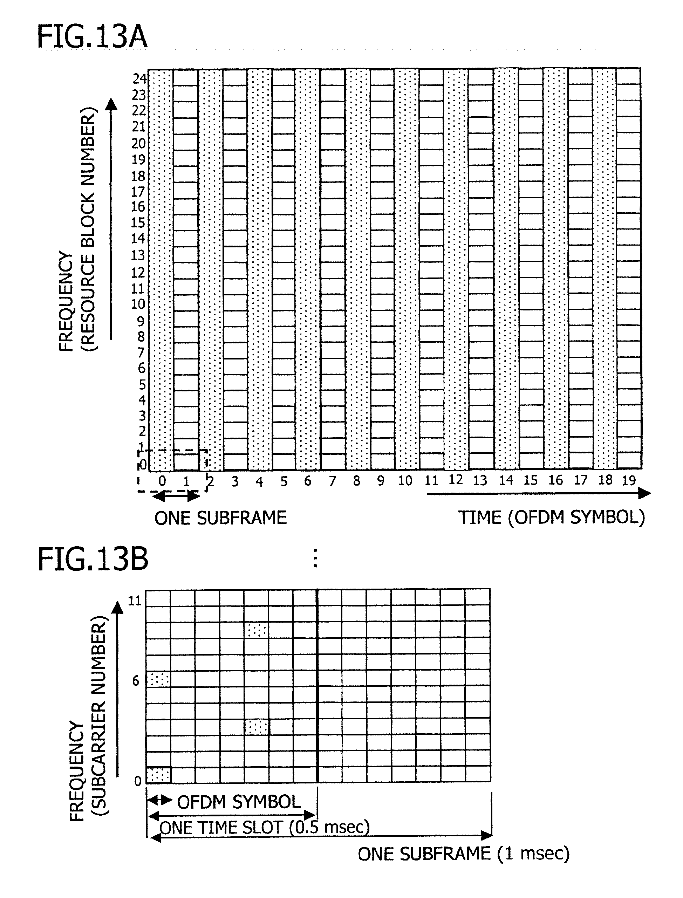

The reference signal is transmitted using a radio resource. The base station manages such the radio resource and transmits the reference signal using  a certain radio resource. Fig. 13A is a diagram illustrating a configuration example of a radio frame in a 5MHz bandwidth, and Fig. 13B is a diagram illustrating a configuration example of a resource block in the 5MHz bandwidth.

A minimum unit of the radio frame corresponds to an OFDM (Orthogonal Frequency Division Multiplexing) symbol in a time axis direction (horizontal axis direction in Figs. 13A and 13B) and a subcarrier in a frequency axis direction (vertical axis direction in Figs. 13A and 13B). In the time axis direction, for example, one slot (0.5 milliseconds) includes 7 OFDM symbols, and one subframe (one millisecond) includes two slots. In addition, in the frequency axis direction, for example, one resource block includes 12 subcarriers, and 25 resource blocks are included when the radio bandwidth is the 5MHz band. It is noted that one resource block includes, for example, 12 subcarriers and 14 OFDM symbols.

In Figs. 13A and 13B, a block represented by a black block indicates an example of radio resources that are used for transmission of the reference signal. The reference signal is transmitted using slots of even number such as "0", "2", and "4", for example, when slot numbers are assigned as illustrated in Fig. 13A. The terminal can receive the reference signal, for example, on the basis of assignment information (scheduling information) of the radio resource, which is transmitted from the base station.

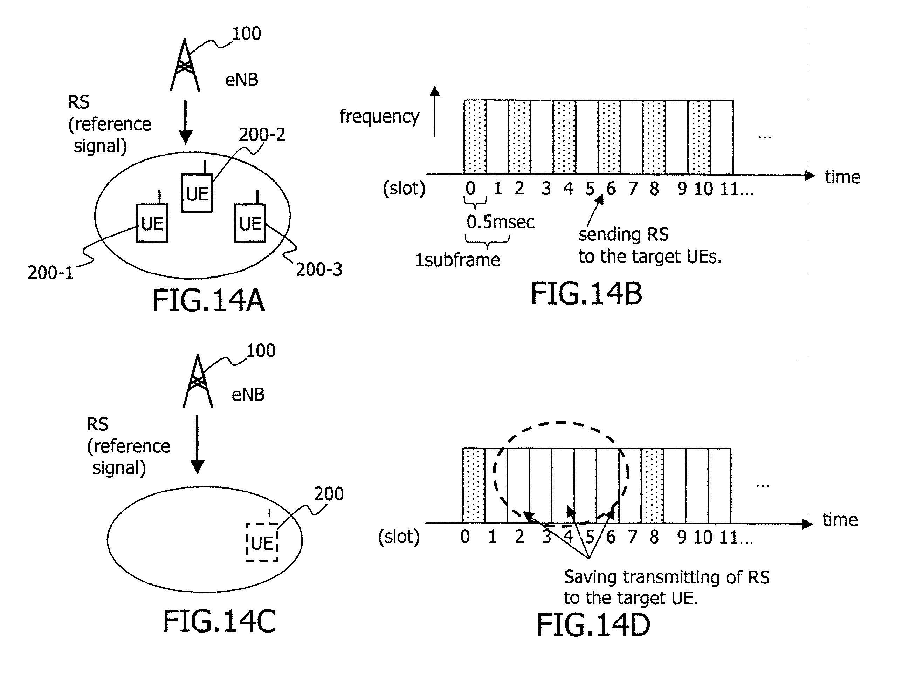

Figs. 14A and 14C are diagrams illustrating connection examples between the base station and the terminal, and Figs. 14B and 14D are diagrams illustrating an assignment example of the radio resource to the reference signal. A base station (eNB: evolutional Node B) 100 is connected by radio to a plurality of terminals (UE: User Equipment) 200-1 to 200-3 that exist within a cell of the own station, and can transmit the reference signal in parallel.

However, there is a case that the reference signal does not be used even when the base station 100 transmits the reference signal, such as a case in which the terminals 200-1 to 200-3 do not exist in the cell of the base station 100, or the like (for example, Fig. 14C). In such the case, the radio resources used to transmit the reference signal are not used efficiently, and the power of the base  station 100 is consumed without effect.

Therefore, the base station 100 discontinuously transmits the reference signal by discontinuous transmission. In the discontinuous transmission of the reference signal, for example, the slot used for the transmission (for example, even number slot) is reduced by one or a plurality of slots, and the reference signal is transmitted using the remaining slots. In the example of Fig. 14D, the base station 100 transmits the reference signal using the slots having the slot numbers "0", "8", ... that are obtained by reducing the slots by the slots having the slot number "2", "4", and "6". By the discontinuous transmission of the reference signal, there is timing at which the reference signal is not transmitted, the base station 100 can cut down the power consumption.

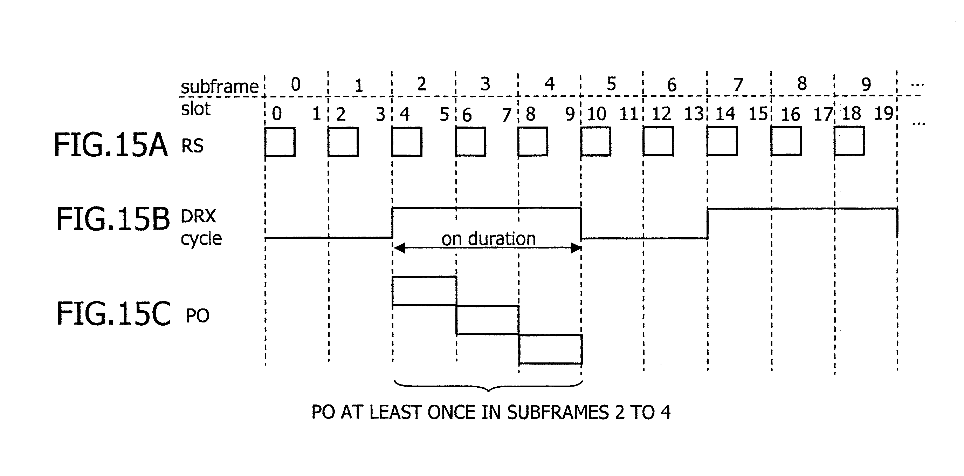

On the other hand, the terminal 200 can operate in a state that is called a DRX (Discontinuous Reception)/DTX (Discontinuous Transmission) mode. Figs. 15A to 15C are diagrams illustrating transmission and reception timing examples of each signal in the DRX/DTX mode. In the DRX/DTX mode, the terminal 200 becomes active in On Duration (active time period, active time, or the like). In addition, the terminal 200 monitors (performs monitoring) incoming addressed to the own terminal in paging occasion that occurs at least once in the time period of the On Duration. That is, the terminal 200 monitors a PDCCH (Physical Downlink Control Channel) in the paging occasion and receives a P-RNTI (Paging-Radio Network Temporary identifier) that is transmitted by a PCH (Paging Channel). In addition, the terminal 200 monitors the incoming addressed to the own terminal by receiving a paging message, or the like, when the received P-RNTI is the P-RNTI addressed to the own terminal. The terminal 200 in the DRX/DTX mode does not necessarily monitor in a time period other than the paging occasion, so that the power consumption can be cut down as compared with a case of monitoring in the whole time period.

It is noted that the paging occasion is, for example, a time period in which the terminal 200 confirms whether or not there is incoming addressed to the own terminal. For example, the base station 100 calculates timing of such paging occasion, a DRX cycle, and On Duration and transmits to the terminal 200.  As a result, the terminal 200 can confirm incoming for each timing. The paging occasion corresponds to one subframe time period for example. A calculation example of the paging occasion is described below.

The base station 100 calculates the timing of the paging occasion using the following equations.

$$PF = SFN \bmod T = (T \operatorname{div} N)*(UE\_id \bmod N) \quad (1)$$

$$i\_s = floor\ (UE\_id/N) \bmod Ns \quad (2)$$

Here, PF (Paging Frame) is a radio frame in which the paging occasion is performed. The radio frame includes the radio frame in which the paging occasion is performed and the radio frame in which the paging occasion does not be performed, and hereinafter, the former radio frame is referred to a paging frame. For example, the base station 100 calculates a frame number of the paging frame by the equation (1). In addition, the base station 100 obtains a subframe number in the paging frame, in which the paging occasion is performed by extracting from a table the subframe number corresponding to "i_s" obtained by calculating the equation (2). In this case, the base station 100 can notify the terminal 200 of the calculated frame number of the paging frame and the calculated subframe number in the paging frame. It is noted that, in the equation (1), "SFN" indicates the subframe number, "T" indicates a cycle time period of DRX or DTX, and "N" indicates min (T, nB) (here, nB is 4T, 2T, T, T/2, T/4, T/8, T/16, or T/32). In addition, "UE_id" indicates "IMSI (International Mobile Subscriber) mod 1024", and "Ns" indicates max (1, nB/T). For example, even in the terminal 200, the timing of the paging occasion can be calculated by performing calculation of the equation (1) and the equation (2). It is noted that calculation of the DRX cycle and the time period of On Duration is referred to, for example, Non-Patent document described later.

On the other hand, the base station 100 can notify the terminal 200 of the presence of an incoming message addressed to the terminal 200 by transmitting a paging message in the paging occasion.

The terminal 200 can confirm the incoming addressed to the own terminal by receiving the paging message, and next, the terminal 200 performs  call connection with the base station 100 by transmitting a reply message for the paging message to the base station 100 to receive the incoming message.

It is noted that, even in the terminal 200 in which the DRX/DTX mode is not applied, the incoming addressed to own terminal can be confirmed in the paging occasion. In this case, the terminal 200 can confirm the incoming addressed to own terminal, for example, in the paging occasion arriving at a constant subframe cycle.

Here, as represented in the equation (1) and the equation (2), the timing of the paging occasion is defined on the basis of a specific IMSI for each of the terminals 200. Thus, the paging occasion is a different timing for each of the terminals 200. Therefore, when there is the plurality of the terminals 200-1 to 200-3 subordinate to the base station 100, each of the terminals 200-1 to 200-3 has the paging occasion of different timing.

It is noted that the DRX/DTX mode may be applied to a case in which the terminal 200 is in an active mode in addition to a case in which the terminal 200 is in an idle mode. When the DRX/DTX mode is applied during the active mode, the terminal 200 merely monitors the paging message during the active time.

There is the following technology as a technology that is related to the DRX/DTX mode. For example, there is a technology by which hand over is completed rapidly by setting a DRX/DTX interval short and transmitting a hand over instruction in an active interval in view of the DRX/DTX interval by the base station.

CITATION LIST

NON-PATENT LITERATURE

Non-Patent Document 1: 3GPP TS36.304 V8.9.0 (2010-03)

PATENT LITERATURE

Patent Document 1: International Publication Pamphlet No. WO2008/001726 A1

SUMMARY OF INVENTION

PROBLEMS TO BE SOLVED BY THE INVENTION

However, there is a case that the terminal cannot confirm the incoming addressed to the own terminal in the paging occasion, when the base station discontinuously transmits the reference signal even in a case in which the terminal is in the DRX/DTX mode.

The timing of the paging occasion is different timing for each of the terminals, as described above. Therefore, when the base station discontinuously transmits the reference signal, there is the case that the terminal cannot receive the reference signal in the paging occasion. In particular, the terminal in the DRX/DTX mode becomes active in the time period of the On Duration, so that the terminal in the DRX/DTX mode has less opportunity in which the paging occasion is applied and it is highly probable that the terminal cannot receive the reference signal, than that of the terminal not in the DRX/DTX mode.

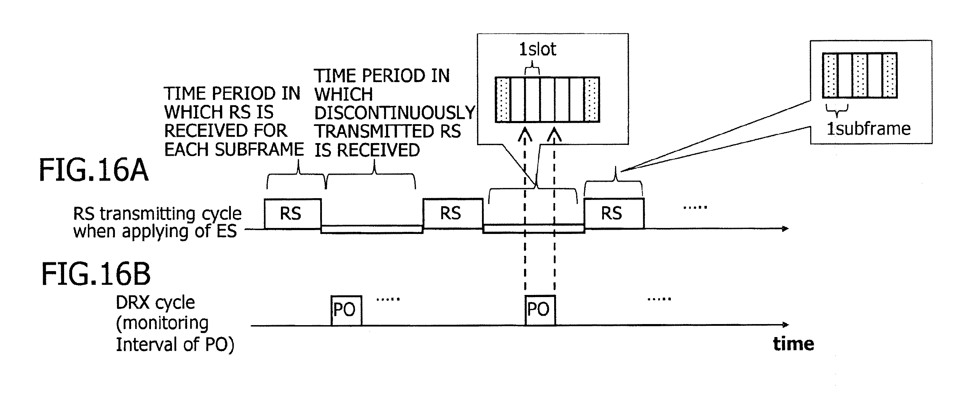

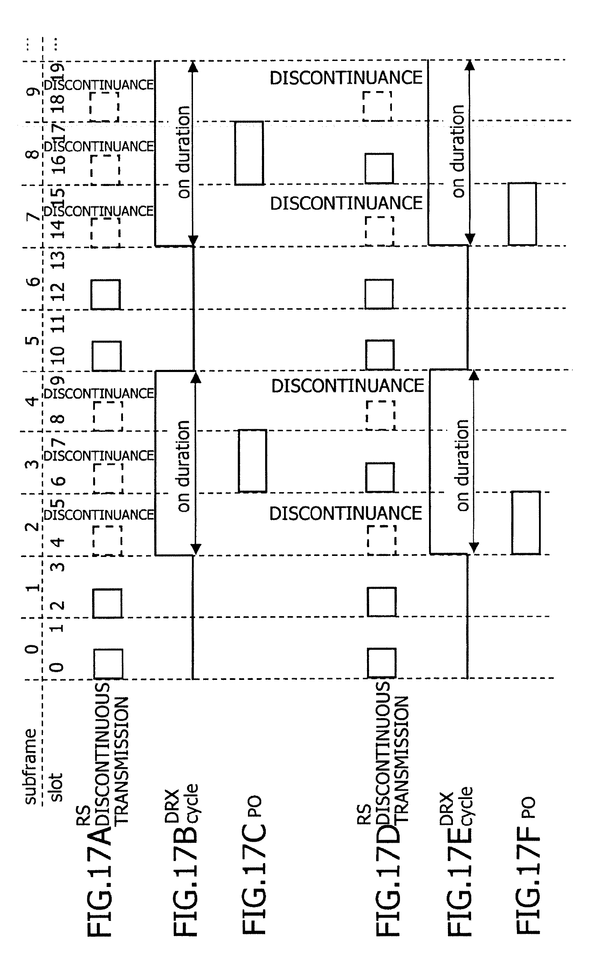

Figs. 16A to 17F are diagrams illustrating examples of reception timing in the terminal. For example, as illustrated in Figs. 16A and 16B, and Fig. 17D to 17F, the timing of the paging occasion may be overlapped with discontinuous timing of the reference signal, so that there is a case that the terminal cannot transmit the reference signal. In addition, as illustrated in Figs. 17A to 17C, the reception timing is overlapped with discontinuous timing of the reference signal over the time period of On Duration, so that there is a case that the terminal cannot receive the reference signal.

When the terminal cannot receive the reference signal, the terminal cannot be synchronized with the base station, so that there is a case that the terminal cannot receive the paging message addressed to the terminal at the timing of the paging occasion even in a case that there is the paging message. The terminal cannot confirm the incoming addressed to the own terminal when the terminal cannot receive the paging message, so that the terminal also cannot receive the incoming message addressed to the own terminal.

In addition, as described above, even for the terminal in which the DRX/DTX mode is not applied, there is an opportunity of the paging occasion. However, when the base station performs discontinuous transmission of the reference signal, there is a case that the terminal cannot receive the reference signal and confirm the incoming addressed to the own terminal depending on the timing of the paging occasion, similar to the case of the DRX/DTX mode.

In addition, in the above-described technology in which the DRX/DTX interval is set short and the hand over is rapidly completed, when the discontinuous transmission of the reference signal is performed even in a case in which the DRX/DTX interval is set short, there is the case that the terminal cannot receive the reference signal depending on the timing.

Accordingly, it is an object in one aspect of the invention to provide a radio base station apparatus for which a terminal apparatus can confirm incoming addressed to the own terminal even when the radio base station apparatus discontinuously transmits a reference signal, a radio communication system, a radio communication method in the radio base station apparatus, and a terminal apparatus.

MEANS FOR SOLVING THE PROBLEMS

According to an aspect of the embodiments, a radio base station apparatus for performing radio communication with a terminal apparatus, the radio base station apparatus including: a control unit which causes to overlap first timing at which the terminal apparatus confirms incoming addressed to the terminal apparatus with a second timing transmitting a reference signal, when the radio base station apparatus transmits the reference signal discontinuously in a second transmission time period shorter than a first transmission time period; and a transmission unit which transmits to the terminal apparatus the first timing overlapped with the second timing.

ADVANTAGEOUS EFFECTS OF THE INVENTION

There can be provided a radio base station apparatus for which a terminal apparatus can confirm an incoming even when the radio base station apparatus discontinuously transmits a reference signal, a radio communication system, a radio communication method in the radio base station apparatus, and a terminal apparatus.

BRIEF DESCRIPTION OF DRAWINGS

Fig. 1 is a diagram illustrating a configuration example of a radio communication system.
Fig. 2 is a diagram illustrating a configuration example of a radio communication system.
Fig. 3 is a diagram illustrating a configuration example of a radio base station apparatus.
Fig. 4 is a diagram illustrating a configuration example of a terminal apparatus.
Fig. 5 is a flowchart illustrating an operation example in the radio base station apparatus.
Figs. 6A to 6E are diagrams illustrating a reception timing example of the terminal apparatus.
Figs. 7A to 7C are diagrams illustrating a reception timing example of the terminal apparatus.
Figs. 8A and 8B are diagrams illustrating an example of a notification method of paging occasion.
Fig. 9 is a sequence diagram illustrating an operation example between the base stations.
Fig. 10 is a flowchart illustrating an operation example of the terminal apparatus.
Figs. 11A and 11B are diagrams respectively illustrating examples of transmission timing of a reference signal and an example of timing of the paging occasion.
Figs. 12A and 12B are diagrams respectively illustrating examples of transmission timing of a reference signal and an example of timing of the paging occasion.
Figs. 13A and 13B are diagrams illustrating configuration examples of a radio frame.
Figs. 14A and 14D are diagrams illustrating connection examples between the radio base station apparatus and the terminal apparatus, and Figs. 14B and 14D are diagrams illustrating examples of the transmission timing of a reference signal.
Figs. 15A to 15C are diagrams illustrating examples of transmission timing, reception timing, and the like.
Figs. 16A and 16B are diagrams respectively illustrating examples of a discontinuous transmission cycle of a reference signal and an example of timing of the paging occasion.
Figs. 17A to 17F are diagrams illustrating examples of transmission, reception timing, and the like.

DESCRIPTION OF EMBODIMENTS

The embodiments are described in detail below with reference with accompanying drawings.

(First Embodiment)

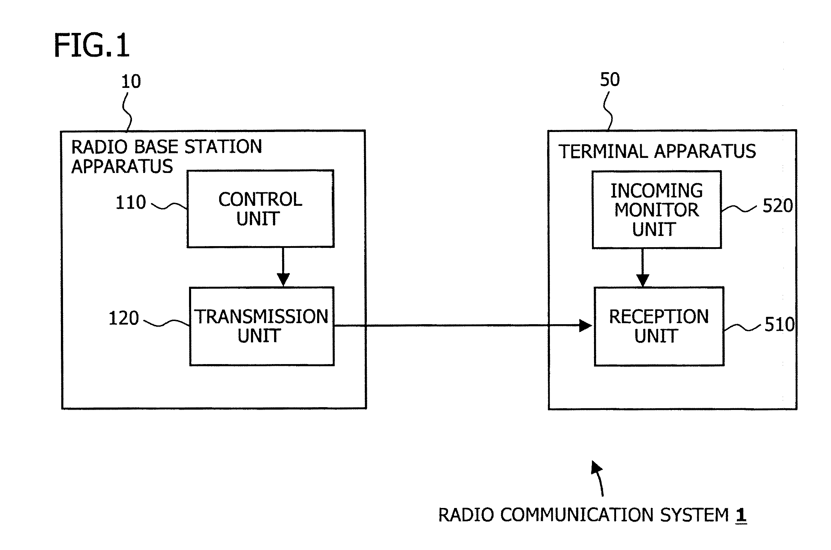

Fig. 1 is a diagram illustrating a configuration example of a radio communication system according to a first embodiment. A radio communication system 1 includes a radio base station apparatus 10 and a terminal apparatus 50.
The radio base station apparatus 10 includes a control unit 110 and a transmission unit 120. In addition, the terminal apparatus 50 includes a reception unit 510 and an incoming monitor unit 520.
The control unit 110 causes to overlap first timing at which the terminal apparatus 50 confirms incoming addressed to the own terminal apparatus and second timing transmitting a reference signal, when the radio base station apparatus transmits the reference signal discontinuously in a second transmission time period shorter than a first transmission time period.
The transmission unit 120 inputs the first timing overlapped with the second timing from the control unit 110 and transmits the first timing to the terminal apparatus 50.
On the other hand, the reception unit 510 in the terminal apparatus 50 receives the first timing transmitted from the radio base station apparatus 10.
The incoming monitor unit 520 issues an instruction to receive the reference signal discontinuously transmitted from the radio base station apparatus 10 at the first timing received in the reception unit 510.
Thus, the terminal apparatus 50 can receive the reference signal at the first timing at which the terminal apparatus 50 confirms the incoming, because the first timing is overlapped with the second timing at which the reference signal is transmitted even when the reference signal is discontinuous transmitted in the radio base station apparatus 10. Therefore, the terminal apparatus 50 can be synchronized with the radio base station apparatus 10 based on the received reference signal, receive a paging message, and confirm the incoming addressed to the terminal apparatus 50.

(Second Embodiment)

A second embodiment is described below. First, the general arrangement example is described, and next, each configuration example of a base station and a terminal is described, and the operation example is finally described.

<Example of Overall Configuration>

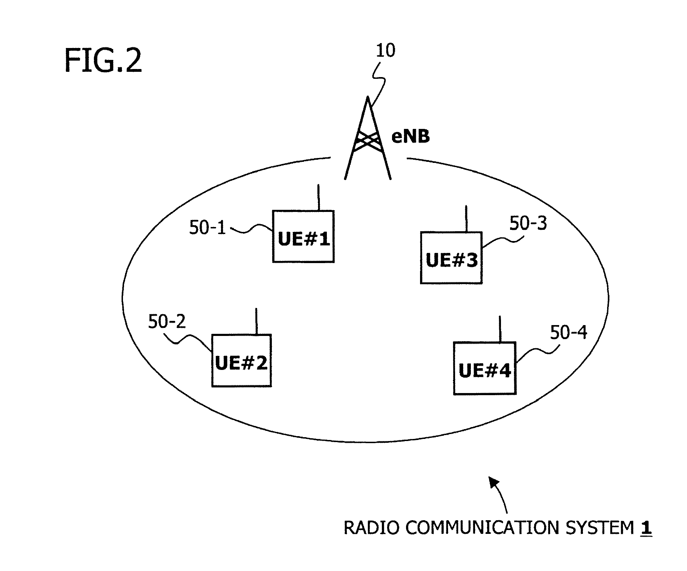

Fig. 2 is a diagram illustrating a configuration example of the radio communication system according to the second embodiment. The radio communication system 1 includes a radio base station apparatus (eNB) (hereinafter referred to as "base station") 10 and terminal apparatuses (UE) (hereinafter, "terminals") 50-1 to 50-4.

The base station 10 provides, for example, various services for the plurality of terminals 50-1 to 50-4 in a cell range by radio communication. The base station 10 can perform radio communication with the plurality of the terminals 50-1 to 50-4 in parallel. On the other hand, each of the terminals 50-1 to 50-4 connects to the base station 10 and performs radio communication with the base station 10. Each of the terminals 50-1 to 50-4 is, for example, a mobile phone, an information mobile terminal, and the like. It is noted that, in the radio communication system 1 illustrated in Fig. 2, the plurality of the terminals 50-1 to 50-4 are illustrated, and alternatively, one terminal 50 may be provided. Hereinafter, each of the plurality of the terminals 50-1 to 50-4 is described as the terminal 50 if not otherwise specified.

The base station 10 and the terminal 50 can perform bidirectional radio communication in the cell range. That is, the base station 10 can perform data transmission (downlink communication) to the terminal 50, and the terminal 50 can perform data transmission (uplink communication) to the base station 10. The base station 10 performs scheduling for the downlink communication and the uplink communication, and performs radio communication by allocating a radio resource. Scheduling information is transmitted, for example, from the base station 10 to the terminal 50 as a control signal, as appropriate. It is noted that, in LTE, OFDMA (Orthogonal Frequency Division Multiple Access) may be used for the downlink communication, and SC-FDMA (Single Carrier Frequency Division Multiple Access) may be used for the uplink communication.

In such a radio communication system 1, the base station 10 can discontinuously transmit a reference signal. In addition, the terminal 50 can operate in the active mode, the idle mode, or the DRX (discontinuous reception)/DTX (discontinuous transmission) mode.

Hereinafter, as described above, the discontinuous transmission of the reference signal is, for example, a case in which a slot used for the transmission (for example, even number slots) is reduced by one or a plurality of slots, and the reference signal is transmitted by using the remaining slots. Alternatively, the discontinuous transmission of the reference signal is, for example, a case in which the reference signal is transmitted in a second cycle longer than a first cycle. Alternatively, the discontinuous transmission of the reference signal is, for example, a case in which the base station 10 transmits the reference signal in a second transmission time period shorter than a first transmission time period. The cell (or base station) in which the discontinuous transmission of the reference signal is performed may be referred to, for example, as a cell (or base station) in an ES (Energy Saving) mode.

In addition, the terminal 50 in the active mode is, for example, a terminal in a state in which a radio path (for example, RRC connection) with the base station 10 can be established. In addition, the terminal 50 in the active mode can also immediately transmit data by the uplink communication, for example, when the terminal 50 receives a transmission instruction from the base station 10.

The terminal 50 in the idle mode is, for example, a terminal in a state in which the radio path is not established. The terminal 50 in the idle mode transmits or receives a message related to the RRC connection, can establish the radio path with the base station 10, and also proceed to the active mode.

In addition, the terminal 50 in the DRX/DTX mode is , for example, a terminal in a state in which data can be discontinuously transmitted or received to or from the base station 10. As described above, the terminal 50 in the DRX/DTX mode confirms the incoming addressed to the own terminal in the paging occasion included at least once in the time period of On Duration.

It is noted that the terminal 50 can operate in the DRX/DTX mode even in the active mode or the idle mode. When the terminal 50 operates in the DRX/DTX mode in the active mode, for example, the terminal 50 establishes the radio path and can transmit or receives data by transmitting and receiving a paging message. In addition, when the terminal 50 operates in the DRX/DTX mode in the idle mode, for example, the terminal 50 performs transmission and reception of a message for the RRC connection because the radio section is not established. In either case, the terminal 50 confirms the incoming addressed to the own terminal in the paging occasion included at least once in the time period of the On Duration. In the DRX/DTX mode, a time period other than the On Duration is called, for example, a sleep time period. The terminal 50 in the DRX/DTX mode does not necessarily confirm reception of the paging message in the sleep time period, so that the power consumption can be cut down as compared with a case in which data and signal are received and transmitted over the whole time period.

It is noted that, even in the terminal 50 to which the DRX/DTX mode is not applied, the paging occasion arrives in a constant subframe cycle, the terminal 50 can confirm the incoming addressed to the own terminal at the timing of the paging occasion.

<Configuration example of the base station>

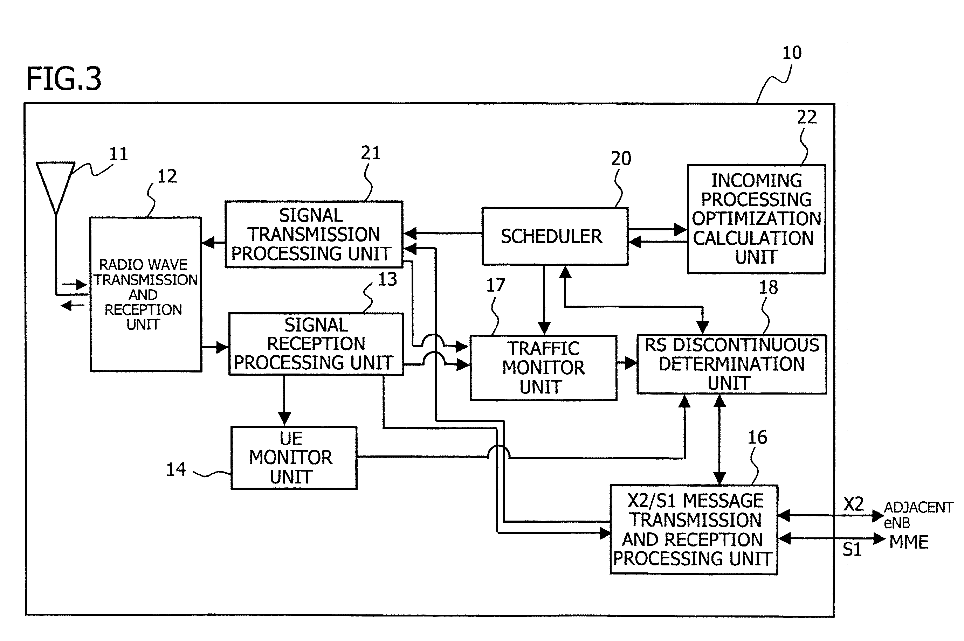

A configuration example of the base station 10 is described below. Fig. 3 is a diagram illustrating the configuration example of the base station 10.

As illustrated in Fig. 3, the base station 10 includes an antenna 11, a radio wave transmission and reception unit 12, a signal reception processing unit 13, a UE monitor unit 14, an X2/S1 message transmission and reception processing unit 16, a traffic monitor unit 17, an RS discontinuous determination unit 18, a scheduler 20, a signal transmission processing unit 21, and an incoming processing optimization calculation unit 22.

It is noted that, in the first embodiment, the control unit 110 corresponds to, for example, the UE monitor unit 14, the traffic monitor unit 17, the RS discontinuous determination unit 18, the scheduler 20, and the incoming processing optimization calculation unit 22. In addition, the transmission unit 120 corresponds to, for example, the signal transmission processing unit 21, the radio wave transmission and reception unit 12, and the antenna 11.

The antenna 11 receives a radio signal transmitted from the terminal 50 or transmits to the terminal 50 the radio signal output from the radio signal transmission and reception unit 12.

The radio wave transmission and reception unit 12 converts the radio signal received in the antenna 11 into a baseband signal and outputs the baseband signal to the signal reception processing unit 13 or converts the baseband signal output from the signal transmission processing unit 21 into the radio signal and outputs the radio signal to the antenna 11. The radio wave transmission and reception unit 12 includes, for example, a frequency converter and a bandwidth pass filter to perform conversion between the radio signal and the baseband signal.

The signal reception processing unit 13 performs demodulation processing, decoding processing, or the like, on the baseband signal output from the radio wave transmission and reception unit 12 to extract the data and signal. For example, when an X2/S1 message is included in the extracted data, the signal reception processing unit 13 outputs the message to the X2/S1 message transmission and reception processing unit 16. In addition, the signal reception processing unit 13 outputs information of a US context (ID of the UE, authentication-related information, and the like) to the UE monitor unit 14. The UE monitor unit 14 has a function to confirm the presence or absence of the UE context stored in the eNB. The information that is included in the UE context is, for example, a UE ID (for example, identification information of the terminal 50), and the like, and a part of the information is transmitted and received by various procedures after the power source of the terminal 50 is turned on for the first time. In the base station 10 and the terminal 50, the UE context is generated at the time that it becomes to be a state capable of communicating (security authentication, and the like, of the terminal 50 is completed), and the process proceeds to a state in which the generated UE context is stored. It is noted that the signal reception processing unit 13 outputs, for example, the extracted message and signal to the traffic monitor unit 17.

As described above, the UE monitor unit 14 confirms the presence or absence of the UE context stored in the base station 10. The UE monitor unit 14 determines that the terminal 50 is active (the communication is allowed) when the UE context of the terminal 50 exists in the base station 10, for example. On the other hand, when the terminal 50 becomes in a state in which the terminal 50 is not active, such as the idle state or a power off state, the UE monitor unit 14 deletes the UE context of the terminal 50 from a memory, or the like. As described above, it can determine that the terminal 50 is active when the UE context exists in the base station 10, and the terminal 50 is not active when the UE context does not exist in the base station 10. The UE monitor unit 14 determines whether or not the terminal 50 is active by confirming the presence or absence of the UE context, and outputs the determination to the RS discontinuous determination unit 18, as monitoring result.

It is noted that the UE context may be stored, for example, in the memory in the UE monitor unit 14, and may be stored in a memory, or the like, in the base station 10 other than the UE monitor unit 14.

In addition, when the terminal 50 is in the active state, the base station 10, a MME (Mobility Management Entity) that is an upper node of the base station 10, and the terminal 50 perform transmission and reception to confirm whether or not an authentication key is matched each other. For example, due to such transmission and reception of the message, the UE monitor unit 14 can detect that the terminal 50 is not in the active state when the UE monitor unit 14 confirms that the authentication key is not matched. Alternatively, the UE monitor unit 14 can detect that the terminal 50 is not in the active state when the UE monitor unit 14 receives a Connection Release message indicating disconnection of the radio communication and the base station 10, from the terminal 50. Alternatively, the UE monitor unit 14 can detect that the terminal 50 is not in the active state when the UE monitor unit 14 does not receive the signal, or the like, from the terminal 50 for a certain time period (or when the signal, or the like, is not input from the signal reception processing unit 13). For example, the UE monitor unit 14 deletes the UE context for the terminal 50, from the memory when the UE monitor unit 14 detects, by such a method, that the terminal 50 is not in the active state.

The X2/S1 message transmission and reception processing unit 16 generates an X2 message or an S1 message in response to the message output from the signal reception processing unit 13, and transmits the X2 message or the S1 message to another base station (for example, adjacent base station) or the MME of the base station 10 respectively. The X2 message is, for example, a message based on an interface when the message is directly transmitted and received between base stations, and the S1 message is, for example, a message based on an interface when the message is transmitted and received to and from another base station through the MME.

In addition, the X2/S1 message transmission and reception processing unit 16 receives the X2 or S1 message from another base station or the MME respectively, and outputs to the signal transmission processing unit a message to be transmitted to the terminal 50 subordinate to the base station 10, when there is the message or the like.

The traffic monitor unit 17 inputs the message or signal output from the signal reception processing unit 13, and detects a traffic amount (for example, a traffic amount per a unit time) of the data or signal received in the base station 10 (uplink transmission link). In addition, the traffic monitor unit 17 inputs the  message or signal from the signal transmission processing unit 21 as well and detects a traffic amount in the downlink communication link transmitted from the base station 10. It is noted that the traffic monitor unit 17 may input scheduling information from the scheduler 20 and detect the traffic amount in the uplink or downlink communication link based on the scheduling information. The traffic monitor unit 17 outputs the detected traffic amount to the RS discontinuous determination unit 18.

The RS discontinuous determination unit 18 determines whether or not the discontinuous transmission of the reference signal is performed, based on the monitoring result output from the UE monitor unit 14. For example, when the UE monitor unit 14 confirms, by the monitoring result, that the UE context exists in the base station 10 (eNB), the RS discontinuous determination unit 18 determines that the discontinuous transmission of the reference signal is not performed and notifies the scheduler 20. On the other hand, for example, when the UE monitor unit 14 confirms, by the monitoring result, that the UE context does not exist in the base station 10 (eNB), the RS discontinuous determination unit 18 determines that the discontinuous transmission of the reference signal is performed in the cell. In this case, the RS discontinuous determination unit 18 notifies the scheduler 20 a cell ID of the cell in which the discontinuous transmission of the reference signal is performed and execution of the discontinuous transmission of the reference signal. The RS discontinuous determination unit 18 may determines, for example, a discontinuous cycle based on the traffic amount output from the traffic monitor unit 17. For example, the traffic monitor unit 17 sets the discontinuous cycle of the reference signal at a cycle shorter than a second threshold value when the traffic amount is larger than a first threshold value, and sets the discontinuous cycle of the reference signal at a cycle that is the same as or longer than the second threshold value when the traffic amount is the first threshold value or less.

When the transmission of the data or signal to the terminal 50 (downlink communication link) and reception of the data or signal transmitted from the terminal 50 (uplink transmission link) are performed, the scheduler 20  performs allocation (or scheduling) of a radio resource used for the transmission and reception.

In addition, for example, when the scheduler 20 receives the notification that the discontinuous transmission of the reference signal is not performed, the scheduler 20 performs scheduling so as to transmit the reference signal by using a predetermined radio resource for each subframe.

In addition, for example, when the scheduler 20 receives the cell ID and the notification that the discontinuous transmission of the reference signal is performed, the scheduler 20 instructs the incoming processing optimization calculation unit 22 to calculate timing of the paging occasion, which is common in the cell in which the discontinuous transmission of the reference signal is performed. When the scheduler 20 receives the timing of the paging occasion from the incoming processing optimization calculation unit 22, the scheduler 20 performs scheduling so as to transmit the timing to the terminal 50. At that time, the scheduler 20 performs scheduling so as to transmit the timing of the paging occasion as notification information (for example, SIB (System Information Block)) by broadcast to the terminal 50 subordinate to the base station 10. The scheduler 20 outputs the scheduling result to the signal transmission processing unit 21 as scheduling information (or the control signal). It is noted that the scheduler 20 may individually notify each of the terminals 50 of the timing of the paging occasion, for example, as an RRC connection reconfiguration message in addition to the timing of the paging occasion by the SIB.

In addition, for example, when the scheduler 20 receives the cell ID and notification that the discontinuous transmission of the reference signal is performed, the scheduler 20 performs scheduling to the reference signal so that the discontinuous transmission of the reference signal is performed in the cell of the cell ID. For example, the scheduler 20 inputs the discontinuous transmission cycle of the reference signal from the incoming processing optimization calculation unit 22 and performs scheduling so that the discontinuous transmission of the reference signal is performed in accordance with the discontinuous cycle.

The signal transmission processing unit 21 performs encoding processing, modulation processing, or the like, on the message output from the X2/S1 message transmission and reception processing unit 16 in accordance with the scheduling information and outputs the message so that the message can be transmitted as a signal. In addition, the signal transmission processing unit 21 generates the reference signal in accordance with the scheduling information and outputs the reference signal so that reference signal can be transmitted.

When the incoming processing optimization calculation unit 22 receives the instruction from the scheduler 20, for example, the incoming processing optimization calculation unit 22 calculates the timing of the paging occasion, which is common to all of the terminals 50 in the cell in which the discontinuous transmission of the reference signal is performed. In addition, the incoming processing optimization calculation unit 22 determines transmission timing of the reference signal so that the timing of the paging occasion is overlapped with the transmission timing of the reference signal, and determines the discontinuous transmission cycle of the reference signal. Alternatively, the incoming processing optimization calculation unit 22 determines the transmission timing of the reference signal so that discontinuous portions of the reference signal are not overlapped with each other at the timing of the paging occasion, and determines the discontinuous transmission cycle of the reference signal. In addition, the incoming processing optimization calculation unit 22 calculates the DRX cycle and the time period of the On Duration so that the paging occasion is included at least once in the time period of the On Duration of the DRX cycle. The detail is described later. The incoming processing optimization calculation unit 22 outputs to the scheduler 20 the calculated timing of the paging occasion, the discontinuous transmission cycle of the reference signal, the DRX cycle, and the time period of the On Duration. It is noted that the scheduler 20 may perform scheduling so as to transmit the DRX cycle and the time period of the On Duration to the terminal 50 by the SIB or RRC connection reconfiguration message.

<Configuration example of the terminal>

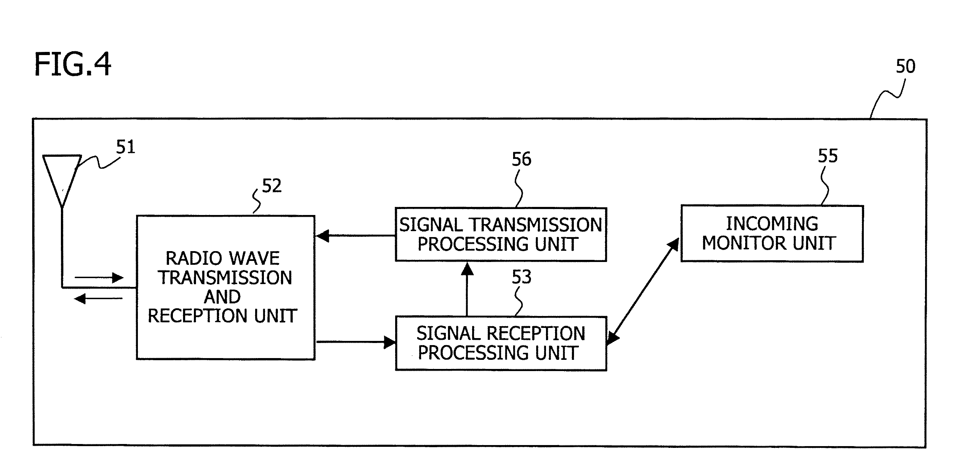

A configuration example of the terminal 50 is described below. Fig. 4 is a diagram illustrating the configuration example of the terminal 50.

As illustrated in Fig. 4, the terminal 50 includes an antenna 51, a radio wave transmission and reception unit 52, a signal reception processing unit 53, an incoming monitor unit 55, and a signal transmission processing unit 56.

In the first embodiment, the reception unit 510 corresponds to, for example, the antenna 51, the radio wave transmission, the reception unit 52, and the signal reception processing unit 53. In addition, the incoming monitor unit 520 corresponds to, for example, the incoming monitor unit 55.

The antenna 51 receives the radio signal transmitted from the base station 10 and outputs the radio signal to the radio wave transmission and reception unit 52, or transmits to the base station 10 the radio signal output from the radio wave transmission and reception unit 52.

The radio wave transmission and reception unit 52 converts the radio signal received at the antenna 51 into a baseband signal and outputs the converted baseband signal to the signal reception processing unit 53, or converts the baseband signal output from the signal transmission processing unit 56 into the radio signal and outputs the converted radio signal to the antenna 51. The radio wave transmission and reception unit 52 includes, for example, a frequency converter and a bandwidth pass filter in order to perform conversion between the radio signal and the baseband signal.

The signal reception processing unit 53 performs demodulation processing, decoding processing, or the like, on the baseband signal in accordance with scheduling information and extracts the data and signal transmitted to the terminal 50. In addition, the signal reception processing unit 53 outputs the timing of the paging occasion received by the SIB (or RRC connection reconfiguration message) to the incoming monitor unit 55, when the timing of the paging occasion is included in the extracted data. In addition, the signal reception processing unit 53 outputs the DRX cycle and the On Duration time period to the incoming monitor unit 55, when the DRX cycle and the time period of the On Duration received by the SIB (or RRC connection reconfiguration message) is extracted from the extracted data.

The incoming monitor unit 55 monitors the incoming addressed to the own terminal in the paging occasion in the On Duration time period when the timing of the paging occasion, the DRX cycle, and the time period of the On Duration output from the signal processing unit 53 input to the incoming monitor unit 55. In this case, the terminal 50 can receive the reference signal and be synchronized with the base station 10 because the timing of the paging occasion in the terminal 50 is overlapped with timing at which the reference signal is received even when the discontinuous transmission of the reference signal is performed. The detail is described later.

The signal transmission processing unit 56 performs signal processing such as modulation processing or encoding processing on the message from another processing unit in accordance with the scheduling information, and performs conversion into the baseband signal. The signal transmission processing unit 56 outputs the baseband signal to the radio wave transmission and reception unit 52. It is noted that the scheduling information is input to the signal transmission processing unit 56 via the signal reception processing unit 53.

<Operation example>

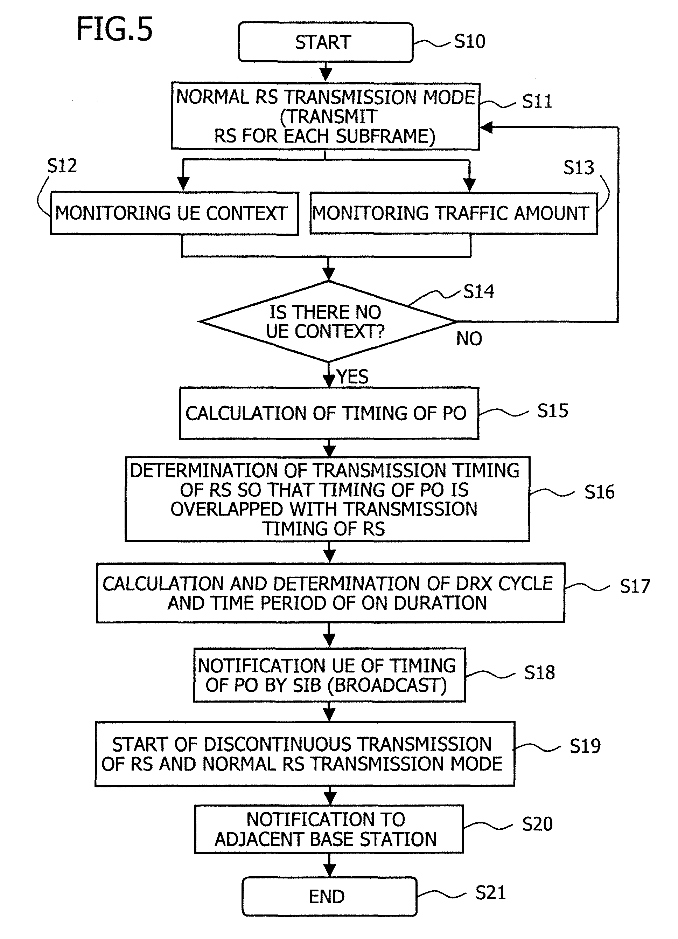

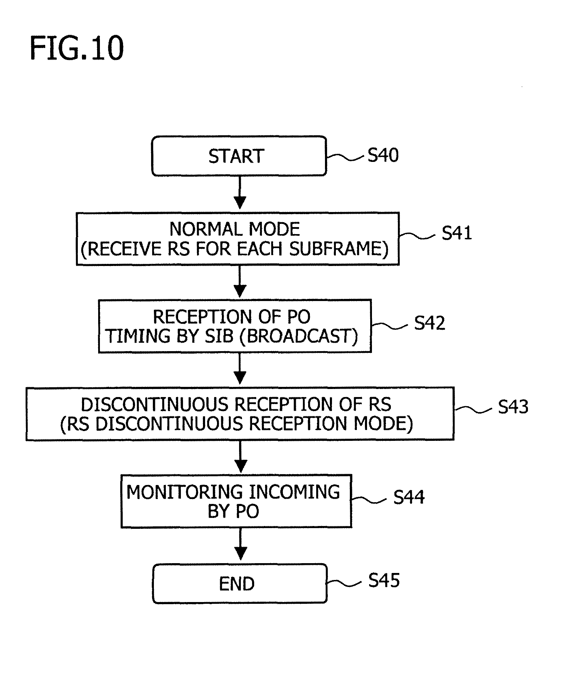

An operation example of the radio communication system 1 is described below. Fig. 5 is an operation example in the base station 10, and Fig. 10 is an operation example in the terminal 50. Firstly, the operation example of the base station 10 is described, and the operation example is the terminal 50 is described next.

<Operation example in the base station 10>

Fig. 5 is a flowchart illustrating the operation example in the base station 10. When processing is started (S10), the base station 10 transmits the reference signal in a normal RS transmission mode firstly (S11). The normal RS transmission mode is, for example, a mode in which the reference signal is not discontinuously transmitted and the reference signal is transmitted for each subframe. In Fig. 14B, for example, an example of a case is described in which the reference signal is transmitted in the normal RS transmission mode. For example, the RS discontinuous determination unit 18 determines that the base station 10 is in the normal RS transmission mode and notifies the scheduler 20 the determination. The scheduler 20 performs scheduling of the reference signal based on the notification, for example. As a result, the reference signal is transmitted in the normal RS transmission mode.

Next, the base station 10 monitors the UE context and the traffic amount (S12 and S13). For example, the UE monitor unit 14 monitors the presence or absence of the UE context for each of the terminals (UE) 50 in the cell, and the traffic monitor unit 17 monitors the traffic amount in the cell (for example, the traffic amount in the downlink communication link). It is noted that any of the two processing may be performed first, and the order of the processing is not limited. When the base station 10 includes a plurality of cells, the base station 10 can monitor the traffic amount and the UE context for each of the terminals (UE) 50 in each of the cells. The UE monitor unit 14 outputs the monitoring result to the RS discontinuous determination unit 18, and the traffic monitor unit 17 outputs the traffic amount to the RS discontinuous determination unit 18.

Next, the base station 10 determines whether or not there is the cell in which the UE context does not exist (S114). For example, the determination is performed when the UE monitor unit 14 monitors whether or not there is the cell in which the UE context does not exist, in the cells subordinates to the base station 10.

When there is the UE context exists (NO in S14), the base station 10 continues the normal RS transmission mode for the cell (S11). For example, when the RS discontinuous determination unit 18 receives the monitoring result indicating that there is a UE context in a cell, from the UE monitor unit 14, the RS discontinuous determination unit 18 notifies the scheduler 20 that the base station 10 operates in the normal RS transmission mode for the cell. As a result, the normal RS transmission mode is continued.

On the other hand, when there is no the UE context in a certain cell (YES in S14), the base station 10 determines the discontinuously transmission of the reference signal is performed and calculates the timing of the paging occasion, which is common in the cell in which the discontinuous transmission of the reference signal is performed (S15). For example, the following equations are used for the calculation of the timing of the paging occasion.

$$PF = SFN \bmod T = (T \operatorname{div} N)*(\alpha \bmod N) \quad (3)$$

$$i\_s = floor(\alpha/N) \bmod Ns \quad (4)$$

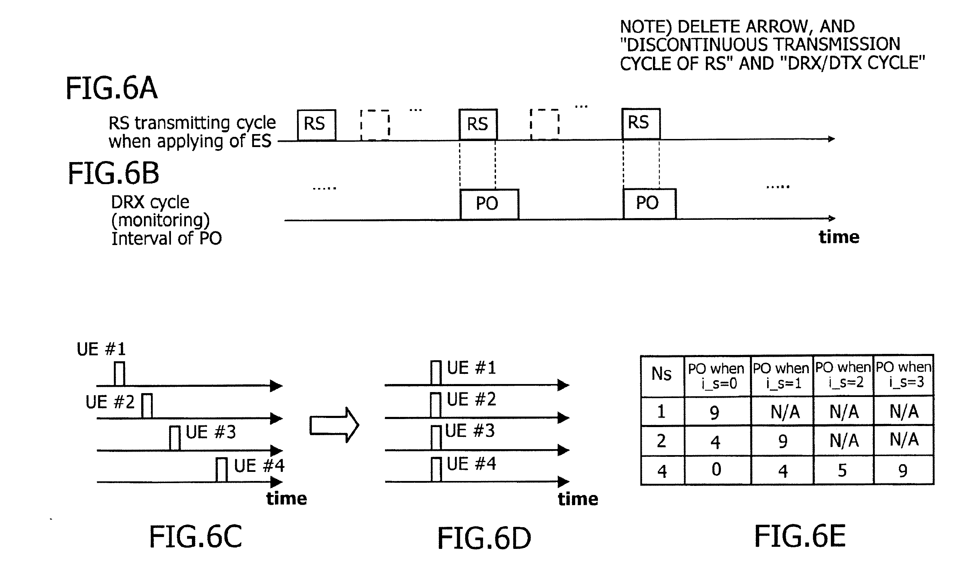

The base station 10 identifies the radio frame number of the paging frame, for example, using the equation (3). In addition, the base station 10 identifies a subframe number in which the paging occasion is performed in the radio frame by extracting from the table a subframe number corresponding to the value i_s obtained by using the equation (4). Fig. 6E is a diagram illustrating an example of the table. A value corresponding to "Ns" and "i_s" of the equation (4) in the table indicate the subframe number.

Here, regarding the equation (3) and the equation (4), when the above-described equation (1) and equation (2) are compared with each other, for each of the terminals 50, the different UE_ID is not used, and a fixed value "$\alpha$" is used. By transmitting the timing of the paging occasion obtained by such calculation by the SIB, for example, the timing of the paging occasion does not different timing for each of the terminals 50 but common timing in the cell transmitted by the SIB. Fig. 6C is a diagram illustrating an example of the timing of the paging occasion, which is different for each of terminals 50, and Fig. 6D is a diagram illustrating an example of the common timing of the paging occasion in the cell. For example, such calculation is performed in the incoming processing optimization calculation unit 22, and the table is stored in the incoming processing optimization calculation unit 22.

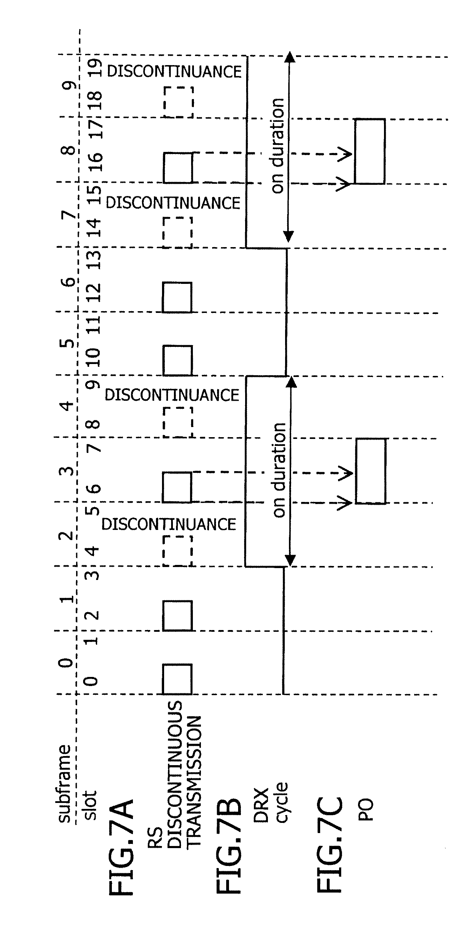

Fig. 7C is a diagram illustrating an example of the timing of the paging occasion. In this example, the timing of the paging occasion is the subframe numbers "3" and "8" in the paging frame. The timing of the paging occasion transmitted from the base station 10 to the terminal 50 is, for example, the radio frame number of the paging frame and the subframe number in the paging frame. When the base station 10 transmits, for example, these two numbers as the timing of the paging occasion, the terminal 50 can identify each timing of the paging frame and the subframe.

Returning to Fig. 5, next, the base station 10 determines the timing at which the reference signal is transmitted so that the timing is overlapped with the determined timing of the paging occasion (S16). Fig. 7A is a diagram illustrating an example of the transmission timing of the reference signal. In the example, the base station 10 determines the transmission timing so that the transmission timing is not overlapped with timing at which the reference signal is discontinuously transmitted, in the subframe number "3" in which the paging occasion is performed, that is, the reference signal is transmitted in the subframe number "3". In the subframe number "8", the transmission timing of the reference signal is determined so that the reference signal is transmitted. As a result, for example, as illustrated in Figs. 6A and 6B, the terminal 50 can receive the reference signal at the timing of the paging occasion. It is noted that the base station 10 can determine the discontinuous transmission cycle of the reference signal based on the determined transmission timing. The processing in S16 is performed, for example, by the incoming processing optimization calculation unit 22.

Next, the base station 10 calculates and determines the DRX cycle and the time period of the On Duration (S17). For example, the incoming processing optimization calculation unit 22 determines the time period of the On Duration so that the timing of the paging occasion determined in S15 is included at least once in the time period of the On Duration. For example, 3GPP TS 36.211 V8.9.0, or the like, is to be referred to regarding the calculation, and the like, of the DRX cycle and the time period of On Duration.

Next, the base station 10 notifies the terminal 50 the timing of the paging occasion as the notification information (for example, SIB) (S18). For example, the scheduler 20 performs scheduling so that the timing of the paging occasion is transmitted in the radio resource to be transmitted as the SIB. In addition, for example, the scheduler 20 performs scheduling so as to transmit the determined DRX cycle and time period of the On Duration (S17) to the terminal 50 by the SIB or RRC connection reconfiguration message. In addition, for example, the scheduler 20 performs scheduling so as to transmit the cell ID of the cell in which the discontinuous transmission of the reference signal is performed and the discontinuous transmission cycle of the reference signal by the SIB.

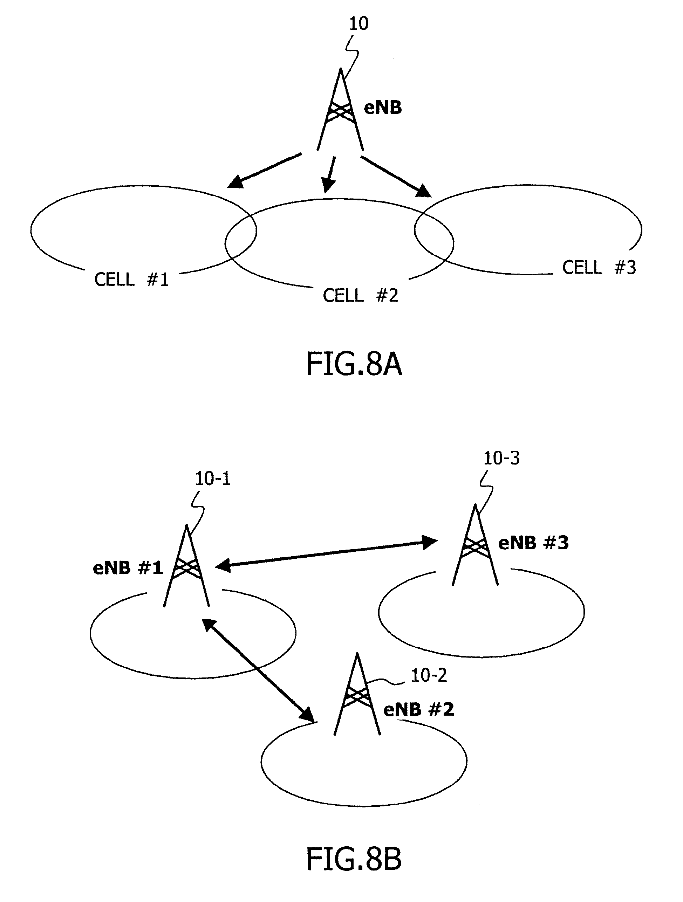

Fig. 8A is a diagram illustrating an example of a transmission method for the discontinuous transmission cycle of the reference signal. For example, as illustrated in Fig. 8A, in a case in which there is a plurality of cells subordinates to the base station 10, when the discontinuous transmission of the reference signal is performed in all of the cells, the base station 10 notifies all of the cells (cell #1 to cell #3) subordinates to the base station 10 of the discontinuous transmission cycle. For example, even when the discontinuous transmission of the reference signal is performed in a certain cell (for example, cell #2) of the cells subordinates to the base station 10, the base station 10 can notifies all of the cells subordinates to the base station 10 of the discontinuous transmission cycle by the SIB. In this case, the base station 10 can perform notification of the cell ID of the cell in which the discontinuous transmission is performed in addition to the notification of the discontinuous transmission cycle by the SIB. As a result, for example, the terminal 50 can obtain information indicating whether or not the discontinuous transmission of a reference signal is performed in the own cell and information indicating whether or not the discontinuous transmission of the reference signal is performed in the cell adjacent to the own cell. When the discontinuous transmission of the reference signal is performed in the adjacent cell, the terminal 50 can grasps, for example, that the discontinuous transmission is performed in the destination cell by hand over. The base station 10 can notify the discontinuous transmission cycle an only cell in which the discontinuous transmission of the reference signal is performed, for example.

Fig. 8B is a diagram illustrating an example when the discontinuous transmission cycle of the reference signal is notified between base stations. As illustrated in Fig. 8B, when the base station 10-1 discontinuously transmits the reference signal in the cell subordinates to the base station 10-1, the base station 10-1 can notify the discontinuous cycle other base stations (peripheral base stations or adjacent base stations) 10-2 and 10-3.

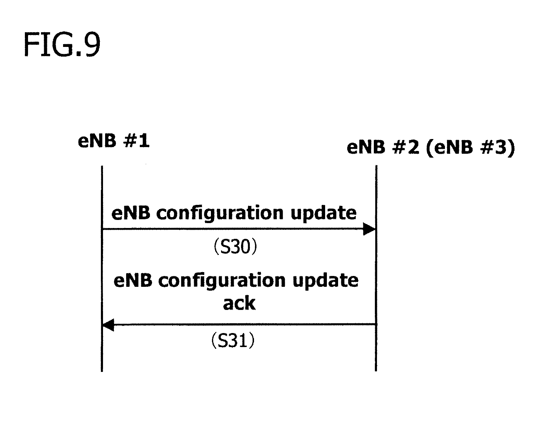

The notification to the other base stations can be performed, for example, in accordance with a sequence example as illustrated in Fig. 9. The base station 10-1 transmits the discontinuous cycle of the reference signal to the other base stations 10-2 and 10-3 by an "eNB configuration update" message that is also an X2 message (S30). Each of the base stations 10-2 and 10-3 received the "eNB configuration update" message transmits a reply message by transmitting an "eNB configuration update ack" message to the base station 10-1 (S31). Such a sequence can be performed, for example, in the X2/S1 message transmission and reception processing unit 16 in each of the base stations 10-1 to 10-3. It is noted that, for example, Table 20.2.2-1 of 3GPP TS 36 300 V8 12.0 (2010-03) or Chapter 8.3.5 and Chapter 9.1.2.8 of 3GPP TS 36.423 V8.9.0 (2010-03) is also to be referred to regarding such a sequence example.

Returning to Fig. 5, next, the base station 10 starts the discontinuous transmission of the reference signal, and operates in the RS discontinuous transmission mode (S19). For example, the scheduler 20 performs scheduling so as to transmit the reference signal to the cell of the cell ID notified from the RS discontinuous determination unit 18 or the incoming processing optimization calculation unit 22, in the RS discontinuous transmission mode, and outputs the scheduling information to the signal transmission processing unit 21. The signal transmission processing unit 21 generates the reference signal in accordance with the scheduling information and transmits the reference signal through the radio wave transmission and reception unit 12 and the antenna 11. As a result, the discontinuous transmission of the reference signal is performed in the cell.

Next, the base station 10 notifies other base station (peripheral base station or adjacent base station) of the discontinuous transmission of the reference signal (S20). As described above, the base station 10 notifies the other base station of the discontinuous transmission by the "eNB configuration update" message, or the like. For example, the X2/S1 message transmission and reception processing unit 16 can transmits an ID of the base station 10 that performs the discontinuous transmission of the reference signal and the cell ID in addition to the discontinuous transmission cycle of the reference signal by including the ID and the cycle in the X2 message or S1 message.

It is noted that the base station 10 may perform the processing in S20 first, and perform the processing in S19 next. In addition, by changing order of the processing S15 to S17, the DRX cycle and the time period of the On Duration may be determined first (S17), the timing of the paging occasion may be calculated next (S15), and the transmission timing of the reference signal may be determined (S16).

In addition, the base station 10 terminates a series of the processing (S21).

<Operation example in the terminal 50>

An operation example in the terminal 50 is described below. Fig. 10 is a flowchart illustrating the operation example in the terminal 50.

When processing is started (S40), the terminal 50 operates in the normal mode firstly (S41). The normal mode is, for example, a mode in which the terminal 50 receives the reference signal for each subframe. Such the operation corresponds to the normal RS transmission mode of the base station 10 (S11).

Next, the terminal 50 receives the timing of the paging occasion by the SIB (or RRC connection reconfiguration message) (S42). For example, the signal reception processing unit 53 receives the timing of the paging occasion and notifies the incoming monitor unit 55 the timing. The incoming monitor unit 55 instructs the signal reception processing unit 53 to receive the reference signal that is discontinuously transmitted from the base station 10, for example, at the notified timing of the paging occasion.

It is noted that the terminal 50 is notified of the DRX cycle and the On Duration time period from the base station 10 by the SIB, or the like. In such a case, the terminal 50 operates in the DRX/DTX mode. In this case, the terminal 50 becomes active in the On Duration time period and receives the reference signal in the paging occasion included at least once in the time period. For example, the incoming monitor unit 55 instructs the signal reception processing unit 53 to become active in the On Duration time period.

Next, the terminal 50 receives the discontinuously transmitted reference signal (S43). For example, the signal reception processing unit 53 can receive the discontinuously transmitted reference signal at the timing of the paging occasion. This is why the timing of the paging occasion is overlapped with the transmission timing at which the reference signal is discontinuously transmitted. The signal reception processing unit 53 can output the received reference signal to each of the units and control each of the units to operate at timing that is synchronized with the reference signal.

Next, the terminal 50 monitors the incoming at the timing of the paging occasion (S44). For example, the signal reception processing unit 53 monitors the PDCCH at the timing of the paging occasion and receives the P-RNTI that is transmitted by the PCH. In addition, the signal reception processing unit 53 receives the paging message when the P-RNTI is the P-RNTI addressed to the own terminal. Next, the terminal 50 terminates the DRX/DTX mode and transmits the reply message for the paging message to the base station 10 to perform call connection, and the signal reception processing unit 53 receives the incoming message addressed to the own terminal.

In addition, the terminal 50 terminates a series of processing (S45).

In the embodiments as described above, the base station 10 calculates the timing of the paging occasion not based on the individual value of the terminal but, for example, based on the characteristic value that is common in the cell in which the discontinuous transmission of the reference signal is performed. As a result, all of the terminals 50 in the cell in which the discontinuous transmission of the reference signal is performed can perform the paging occasion at the common timing.

In addition, because such the timing of the paging occasion is overlapped with the transmission timing at which the reference signal is discontinuously transmitted, even when the discontinuous transmission of the reference signal is performed, the terminal 50 can receive the reference signal in the paging occasion. Therefore, even when the base station 10 discontinuously transmits the reference signal, the terminal 50 can be synchronized with the base station 10 by the reference signal and can confirm incoming.

In addition, the base station 10 calculates the DRX cycle and the time period of the On Duration so that the paging occasion occurs at least once in the On Duration time period. Thus, even in the DRX/DTX mode, the terminal 50 can receive the reference signal and confirm incoming.

[Other embodiments]

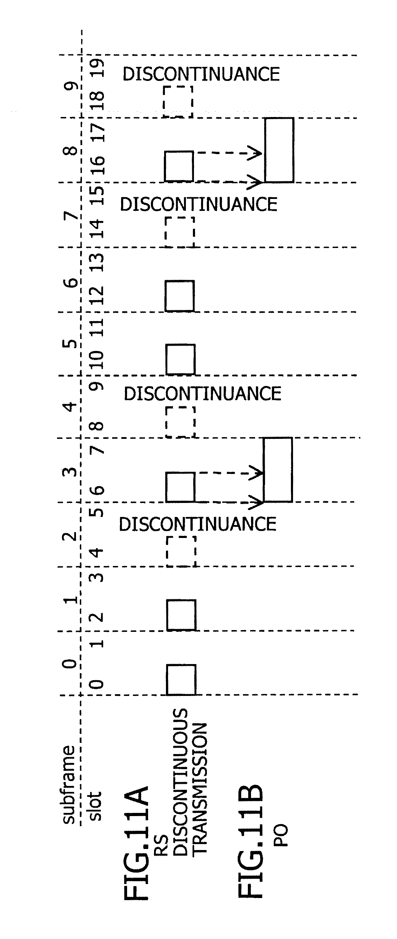

In the above-described second embodiment, the terminal 50 is described as a terminal that operates in the DRX/DTX mode. For example, even in the case of the terminal 50 to which the DRX/DTX mode is not applied (for example, in the case of the active mode), the above-described second embodiment can be implemented. This is why the paging occasion is performed in the terminal 50 as well regardless of application or non-application of the DRX/DTX mode. Fig. 11 is a diagram illustrating the reception timing example, or the like, in the normal mode. As described above, in the terminal 50 to which the DRX/DTX is not applied, the paging occasion is performed in the constant subframe cycle. Even in such a case, the timing of the paging occasion is calculated by using the equation (3) and the equation (4), similar to the second embodiment, and the discontinuous transmission cycle of the reference signal is determined so as to be overlapped with the transmission timing of the reference signal. However, for example, the base station 10 does not necessarily perform the processing of S17 in the example of Fig. 5, because the base station 10 does not necessarily calculate the DRX cycle and the time period of the On Duration and transmits the DRX cycle and time period to the terminal 50.

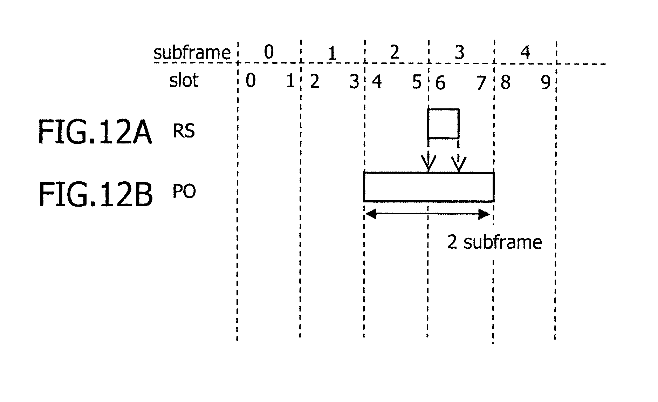

In addition, in the above-described second embodiment, for example, as illustrated in Figs. 7A to 7C, an example is illustrated in which the start timing of the paging occasion is overlapped with the transmission start timing of the reference signal. As long as the timing of the paging occasion is overlapped with the transmission timing of the reference signal, the start timing of the paging occasion may not be overlapped with the transmission start timing of the reference signal. Figs. 12A and 12B are diagrams illustrating an example of the transmission timing of the reference signal and an example of the timing of the paging occasion. The reference signal is transmitted in the "third" subframe, and the paging occasion is performed in the "second" to the "third" subframe time periods. The example is described in which the transmission timing of the reference signal is included in the timing of the paging occasion.

REFERENCE SIGNS LIST

        1: radio communication system
        10 (10-1to 10-3): radio base station apparatus (base station)
        13: signal reception processing unit
        14: UE monitor unit
        16: X2/S1 message transmission and reception processing unit
        17: traffic monitor unit
        18: RS discontinuous determination unit
        20: scheduler
        21: signal transmission processing unit
        22: incoming processing optimization calculation unit
        50 (50-1to 50-4): terminal apparatus (terminal)
        53: signal reception processing unit
        55: incoming monitor unit
        110: control unit
        120: transmission unit
        510: reception unit
        520: incoming monitor unit


**Claims**

1. A radio base station apparatus for performing radio communication with a terminal apparatus, the radio base station apparatus comprising:

    a control unit which causes to overlap first timing at which the terminal apparatus confirms incoming addressed to the terminal apparatus with a second timing transmitting a reference signal, when the radio base station apparatus transmits the reference signal discontinuously in a second transmission time period shorter than a first transmission time period; and
    a transmission unit which transmits to the terminal apparatus the first timing overlapped with the second timing.

2. The radio base station apparatus according to claim 1, wherein
   the control unit determines a first cycle and active time period so that the first timing overlapped with the second timing is included in the active time period of the first cycle, when the discontinuous reception or discontinuous transmission is performed in the first cycle in the terminal apparatus, and
   the transmission unit transmits the determined first cycle and active time period to the terminal apparatus.

3. The radio base station apparatus according to claim 1, wherein
   the control unit determines the first timing and causes to overlap the first timing and the second timing by determining the second timing to overlap the determined first timing with the second timing.

**4.** The radio base station apparatus according to claim 3, wherein
the control unit determines the first timing to transmit the reference signal at common timing to all of the terminal apparatuses existing within a cell in which the discontinuous transmission of the reference signal is performed.

**5.** The radio base station apparatus according to claim 3, wherein
the control unit calculates the first timing by using a characteristic value instead of a different value for each of the terminal apparatus and determines the first timing.

**6.** The radio base station apparatus according to claim 1, wherein
the transmission unit transmits the reference signal at the second timing when the transmission unit transmits the reference signal discontinuously.

**7.** The radio base station apparatus according to claim 1, wherein
the control unit determines a discontinuous transmission cycle of the reference signal based on a traffic amount of signal transmitted and received to and from the terminal apparatus.

**8.** The radio base station apparatus according to claim 1, wherein
the control unit determines a cell in which discontinuous transmission of the reference signal is performed and a discontinuous transmission cycle when the control unit performs the discontinuous transmission of the reference signal, and
the transmission unit transmits a cell ID of the cell in which the discontinuous transmission is performed and the discontinuous transmission cycle, to the terminal apparatus and another radio base station apparatus.

**9.** A radio communication system comprising:

a terminal apparatus; and
a radio base station apparatus, wherein
the radio communication is performed between the terminal apparatus and the radio base station apparatus,
the radio base station apparatus includes:

a control unit which causes to overlap first timing at which the terminal apparatus confirms incoming addressed to the terminal apparatus with second timing transmitting a reference signal, when the radio base station apparatus performs discontinuous transmission of the reference signal in second transmission time period shorter than first transmission time period, and a transmission unit which transmits to the terminal apparatus the first timing overlapped with the second timing, and
the terminal apparatus includes:

a reception unit which receives the first timing transmitted from the radio base station apparatus, and
an incoming monitor unit which instructs the reception unit to receive at the received first timing the reference signal to be discontinuously transmitted.

**10.** A radio communication method in a radio base station apparatus for performing radio communication with a terminal apparatus, the method comprising:

causing to overlap first timing at which incoming addressed to the own terminal apparatus is confirmed in the terminal apparatus with second timing at which the reference signal is transmitted, when the radio base station apparatus performs discontinuous transmission of a reference signal in a second transmission time period shorter than a first transmission time period; and
transmitting the first timing overlapped with the second timing to the terminal apparatus.

**11.** A terminal apparatus for performing radio communication with a radio base station apparatus, the terminal apparatus comprising:

a reception unit that receives first timing to confirm incoming addressed to the terminal apparatus overlapped with second timing at which the reference signal is transmitted, when the radio base station apparatus performs discontinuous transmission of a reference signal in a second transmission time period shorter than a first transmission time period; and
an incoming monitor unit that instructs the reception unit to receive the reference signal that is discontinuously transmitted at the received first timing.

# FIG.1

RADIO BASE STATION APPARATUS (10)
- CONTROL UNIT (110)
- TRANSMISSION UNIT (120)

TERMINAL APPARATUS (50)
- INCOMING MONITOR UNIT (520)
- RECEPTION UNIT (510)

RADIO COMMUNICATION SYSTEM **1**

EP 2 670 199 A1

# FIG.2

EP 2 670 199 A1

FIG.3

INCOMING PROCESSING OPTIMIZATION CALCULATION UNIT 22

SCHEDULER 20

RS DISCONTINUOUS DETERMINATION UNIT 18

TRAFFIC MONITOR UNIT 17

X2/S1 MESSAGE TRANSMISSION AND RECEPTION PROCESSING UNIT 16

SIGNAL TRANSMISSION PROCESSING UNIT 21

SIGNAL RECEPTION PROCESSING UNIT 13

UE MONITOR UNIT 14

RADIO WAVE TRANSMISSION AND RECEPTION UNIT 12

11

10

X2 — ADJACENT eNB

S1 — MME

# FIG.4

EP 2 670 199 A1

## FIG.5

```
                    ┌──────────────────┐
                    │      START       │────S10
                    └──────────────────┘
                             │
                             ▼
        ┌──────────────────────────────────────┐
        │   NORMAL RS TRANSMISSION MODE         │────S11
        │          (TRANSMIT                    │
        │    RS FOR EACH SUBFRAME)              │
        └──────────────────────────────────────┘
             │                        │
  S12        ▼                        ▼           S13
 ┌─────────────────────────┐  ┌─────────────────────────┐
 │  MONITORING UE CONTEXT  │  │ MONITORING TRAFFIC AMOUNT│
 └─────────────────────────┘  └─────────────────────────┘
                    │
                    ▼
              ╱───────────────╲         S14
             ╱   IS THERE NO    ╲
            ╱    UE CONTEXT?      ╲───────────
             ╲                   ╱      NO
              ╲─────────────────╱
                    │ YES
                    ▼
        ┌──────────────────────────────────────┐
        │   CALCULATION OF TIMING OF PO         │────S15
        └──────────────────────────────────────┘
                    │
                    ▼
        ┌──────────────────────────────────────┐
        │ DETERMINATION OF TRANSMISSION TIMING  │
        │   OF RS SO THAT TIMING OF PO IS       │────S16
        │   OVERLAPPED WITH TRANSMISSION        │
        │         TIMING OF RS                  │
        └──────────────────────────────────────┘
                    │
                    ▼
        ┌──────────────────────────────────────┐
        │ CALCULATION AND DETERMINATION OF DRX  │────S17
        │ CYCLE AND TIME PERIOD OF ON DURATION  │
        └──────────────────────────────────────┘
                    │
                    ▼
        ┌──────────────────────────────────────┐
        │   NOTIFICATION UE OF TIMING           │────S18
        │   OF PO BY SIB (BROADCAST)            │
        └──────────────────────────────────────┘
                    │
                    ▼
        ┌──────────────────────────────────────┐
        │ START OF DISCONTINUOUS TRANSMISSION   │────S19
        │ OF RS AND NORMAL RS TRANSMISSION MODE │
        └──────────────────────────────────────┘
                    │
                    ▼
        ┌──────────────────────────────────────┐
        │      NOTIFICATION TO                  │────S20
        │   ADJACENT BASE STATION               │
        └──────────────────────────────────────┘
                    │
                    ▼
              ┌──────────────┐
              │     END      │────S21
              └──────────────┘
```

## FIG.6A

RS transmitting cycle
when applying of ES

| RS | | ··· | RS | | ··· | RS |

## FIG.6B

DRX cycle
(monitoring)
Interval of PO

····· | PO | | PO | ·····

time

EP 2 670 199 A1

UE #1

UE #2

UE #3

UE #4

time

⟹

UE #1

UE #2

UE #3

UE #4

time

| Ns | PO when i_s=0 | PO when i_s=1 | PO when i_s=2 | PO when i_s=3 |
|----|------|------|------|------|
| 1 | 9 | N/A | N/A | N/A |
| 2 | 4 | 9 | N/A | N/A |
| 4 | 0 | 4 | 5 | 9 |

FIG.6C                    FIG.6D                    FIG.6E

subframe: 0 1 2 3 4 5 6 7 8 9

slot: 0 1 2 3 4 5 6 7 8 9 10 11 12 13 14 15 16 17 18 19

**FIG.7A**

RS
DISCONTINUOUS
TRANSMISSION

DISCONTINUANCE

**FIG.7B**

DRX
cycle

on duration

**FIG.7C**

PO

EP 2 670 199 A1

10

eNB

CELL #1    CELL #2    CELL #3

FIG.8A

10-1    10-3

eNB #1    eNB #3

10-2

eNB #2

FIG.8B

# FIG.9

**eNB #1**                                   **eNB #2 (eNB #3)**

eNB configuration update
(S30)

eNB configuration update
ack
(S31)

# FIG.10

```
          ┌─────────────────────────┐
          │         START           │ ──── S40
          └─────────────────────────┘
                      │
                      ▼
      ┌─────────────────────────────────┐
      │         NORMAL MODE              │ ──── S41
      │ (RECEIVE RS FOR EACH SUBFRAME)   │
      └─────────────────────────────────┘
                      │
                      ▼
      ┌─────────────────────────────────┐
      │        RECEPTION OF PO           │ ──── S42
      │   TIMING BY SIB (BROADCAST)      │
      └─────────────────────────────────┘
                      │
                      ▼
    ┌───────────────────────────────────────┐
    │   DISCONTINUOUS RECEPTION OF RS        │ ──── S43
    │ (RS DISCONTINUOUS RECEPTION MODE)      │
    └───────────────────────────────────────┘
                      │
                      ▼
        ┌─────────────────────────────┐
        │   MONITORING INCOMING       │ ──── S44
        │          BY PO              │
        └─────────────────────────────┘
                      │
                      ▼
          ┌─────────────────────────┐
          │          END            │ ──── S45
          └─────────────────────────┘
```

| subframe | 0 | | 1 | | 2 | | 3 | | 4 | | 5 | | 6 | | 7 | | 8 | | 9 | |
|---|---|---|---|---|---|---|---|---|---|---|---|---|---|---|---|---|---|---|---|---|
| slot | 0 | 1 | 2 | 3 | 4 | 5 | 6 | 7 | 8 | 9 | 10 | 11 | 12 | 13 | 14 | 15 | 16 | 17 | 18 | 19 |

## FIG.11A
RS
DISCONTINUOUS
TRANSMISSION

## FIG.11B
PO

subframe | 0 | 1 | 2 | 3 | 4 |

slot | 0 1 | 2 3 | 4 5 | 6 7 | 8 9 |

FIG.12A  RS

FIG.12B  PO

2 subframe

## FIG.13A

FREQUENCY (RESOURCE BLOCK NUMBER)

ONE SUBFRAME

TIME (OFDM SYMBOL)

## FIG.13B

FREQUENCY (SUBCARRIER NUMBER)

OFDM SYMBOL

ONE TIME SLOT (0.5 msec)

ONE SUBFRAME (1 msec)

FIG.14A

RS
(reference signal)

100

eNB

200-2

200-1

200-3

UE

UE

UE

FIG.14B

frequency

time

0 1 2 3 4 5 6 7 8 9 10 11...

(slot)

0.5msec

1subframe

sending RS
to the target UEs.

FIG.14C

RS
(reference signal)

100

eNB

200

UE

FIG.14D

time

0 1 2 3 4 5 6 7 8 9 10 11...

(slot)

Saving transmitting of RS
to the target UE.

EP 2 670 199 A1

| subframe | 0 | 1 | 2 | 3 | 4 | 5 | 6 | 7 | 8 | 9 | ... |
|---|---|---|---|---|---|---|---|---|---|---|---|
| slot | 0  1 | 2  3 | 4  5 | 6  7 | 8  9 | 10  11 | 12  13 | 14  15 | 16  17 | 18  19 | ... |

FIG.15A  RS

FIG.15B  DRX cycle

on duration

FIG.15C  PO

PO AT LEAST ONCE IN SUBFRAMES 2 TO 4

1slot

TIME PERIOD IN
WHICH
DISCONTINUOUSLY
TRANSMITTED RS
IS RECEIVED

TIME PERIOD IN
WHICH RS IS
RECEIVED FOR
EACH SUBFRAME

1subframe

# FIG.16A

RS transmitting cycle
when applying of ES

| RS | | RS | | RS | ..... |

# FIG.16B

DRX cycle
(monitoring
Interval of PO)

| PO | ..... | PO | ..... |

time

FIG.17A $\overset{\text{RS}}{\underset{\text{TRANSMISSION}}{\text{DISCONTINUOUS}}}$

FIG.17B $\overset{\text{DRX}}{\underset{\text{cycle}}{}}$

FIG.17C PO

FIG.17D $\overset{\text{RS}}{\underset{\text{TRANSMISSION}}{\text{DISCONTINUOUS}}}$

FIG.17E $\overset{\text{DRX}}{\underset{\text{cycle}}{}}$

FIG.17F PO

EP 2 670 199 A1

32

<table>
<tr><td colspan="2"><b>INTERNATIONAL SEARCH REPORT</b></td><td>International application No.<br>PCT/JP2011/051285</td></tr>
</table>

**A. CLASSIFICATION OF SUBJECT MATTER**
*H04W52/02*(2009.01)i

According to International Patent Classification (IPC) or to both national classification and IPC

**B. FIELDS SEARCHED**

Minimum documentation searched (classification system followed by classification symbols)
H04W52/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/140298 A1 (Panasonic Corp.),<br>09 December 2010 (09.12.2010),<br>paragraphs [0138] to [0144]<br>(Family: none) | 1-11 |

☐ Further documents are listed in the continuation of Box C.          ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>11 March, 2011 (11.03.11) | Date of mailing of the international search report<br>22 March, 2011 (22.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 670 199 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008001726 A1